Europäisches Patentamt

European Patent Office    (11) Numéro de publication: **0 020 277**
**A1**
Office européen des brevets

(19)

# (12) DEMANDE DE BREVET EUROPEEN

(21) Numéro de dépôt: 80400778.9

(22) Date de dépôt: 02.06.80

(51) Int. Cl.³: **H 01 M 2/30, H 01 M 2/02**

(30) Priorité: 05.06.79 FR 7914298

(71) Demandeur: **Ducoin, Jacques Henri Charles Maurice,
11 rue Carnot, Mareuil-Sur-Ay F-51160 AY, Marne (FR)**

(43) Date de publication de la demande: 10.12.80
**Bulletin 80/25**

(72) Inventeur: **Ducoin, Jacques Henri Charles Maurice,
11 rue Carnot, Mareuil-Sur-Ay F-51160 AY, Marne (FR)**

(74) Mandataire: **Casanova, André CABINET ARMENGAUD
JEUNE CASANOVA, AKERMAN, LEPEUDRY et al,
23 boulevard de Strasbourg, F-75010 Paris (FR)**

(84) Etats contractants désignés: **AT BE CH DE FR GB IT LI
LU NL SE**

(54) **Batterie d'accumulateurs et appareil électroménager susceptible d'être équipé d'au moins une telle batterie.**

㉗    Les bornes (1) de la batterie, saillant du bac (5) à la face inférieure de ce dernier, par leur extrémité inférieure présentant leur plus grande section, ont leur extrémité supérieure qui émerge à l'intérieur d'une cavité (8) formée dans la face supérieure (6) de la batterie. Les cavités (8) ont des dimensions internes correspondant aux plus grandes sections des bornes (1), dont l'extrémité inférieure présente un dégagement (1a) permettant l'introduction de l'extrémité supérieure de la borne (1) correspondante d'une batterie placée en dessous.
    Application à l'équipement d'appareils électroménagers.

Batterie d'accumulateurs et appareil électroménager susceptible d'être équipé d'au moins une telle batterie.

————————————————

La présente invention a pour objet une batterie d'accumulateurs, destinée en particulier, mais non exclusivement, à constituer la source d'énergie d'un appareil électroménager tel qu'une cuisinière, un réfrigérateur, un récepteur de télévision.. etc., ainsi qu'un appareil électroménager équipé d'un socle pour recevoir au moins une batterie selon l'invention.

La crise de l'énergie conduit, en particulier vis-à-vis d'énergies douces telles que celles qui sont produites par des photopiles, des piles photo-voltaïques, des éoliennes ou autres, à désynchroniser la production d'énergie et sa consommation. Dans cette optique, il est souhaitable que chaque matériel utilisateur soit muni d'un dispositif accumulateur. En fait, les sources d'énergie douce ne fonctionnent que par périodes temporaires, alors que le matériel n'est utilisé que pendant quelques instants, minutes ou heures par jour et non obligatoirement pendant les périodes de production d'énergie. Indépendamment de ces énergies de substitution, l'introduction de batteries d'accumulateurs sur ces appareils permet la charge de celles-ci pendant les heures creuses sur le réseau électrique habituel. Il est bien connu toutefois que les batteries d'accumulateurs posent des problèmes d'entretien relativement délicats. Le point le plus crucial est celui de la connexion des batteries qui est actuellement résolu par le serrage de colliers autour des bornes, celles-ci étant recouvertes d'une couche de graisse afin d'éviter la sulfatation desdites bornes.

Il s'est avéré d'autre part que les contacts ainsi constitués créaient des déperditions d'énergie notables. Par les brevets des Etats-Unis d'Amérique 3 261 719, de la République Fédérale d'Allemagne 1064 130 et du Royaume Uni 790 025, on connaît déjà des batteries d'accumulateurs comprenant un bac à l'intérieur duquel un nombre pair de plaques est plongé dans un électrolyte introduit dans le bac par la face supérieure de ce dernier, les plaques étant connectées, de deux en deux, en deux groupes dont chacun est au moins relié à l'une de deux bornes de sortie, faisant saillie hors du bac sur une face de ce dernier différente de la face supérieure par laquelle l'électrolyte est introduit. Tandis que dans le brevet GB 79 0025, les bornes de sortie font saillie, sur une face latérale de la batterie, il est prévu, dans les deux autres brevets précités, que les bornes fassent saillie à la partie inférieure de la batterie, et constituent même, au moins en partie, des supports pour la batterie, dans un mode de réalisation décrit dans le brevet US 3 261 719.

Cependant, aucun de ces trois brevets ne décrit d'agencement particulier permettant, de façon sûre, rapide, et pratique, d'assurer simultanément une liaison électrique et une solidarisation mécanique d'au moins une batterie de ce type avec des électrodes correspondantes d'un appareil utilisateur, ou de plusieurs batteries identiques de ce type les unes avec les autres .

La présente invention a pour objet de remédier à ces inconvénients et a pour but de permettre une plus grande diffusion des accumulateurs dans les foyers en simplifiant leur mise en oeuvre.

Selon la présente invention, la batterie d'accumulateurs du type précité, dont les bornes de sortie font saillie hors du bac à la face inférieure de ce dernier, et constituent des supports pour la batterie, se caractérise en ce qu'au moins deux bornes de sortie présentent leur plus grande section à leur extrémité inférieure, saillant hors du bac, et en ce que leur extrémité supérieure émerge chacune à l'intérieur d'une cavité formée dans la face supérieure de la batterie.

Ainsi, selon l'invention, les contacts sont établis par de simples contacts des bornes sur des électrodes correspondantes de l'appareil utilisateur, ou sur des bornes correspondantes de batteries identiques, avec centrage de ces dernières les unes sur les autres, la qualité de ces contacts étant assurée par le propre poids de la ou des batteries.

Selon encore une autre caractéristique de l'invention, les bornes précitées ont une forme tronconique, la partie de plus grand diamètre correspondant au bas de la batterie.

D'autres caractéristiques et avantages de l'invention apparaîtront au cours de la description qui va suivre de modes de réalisation de l'invention, donnés à titre d'exemples non limitatifs, en regard des figures qui représentent :

la figure 1 une vue d'une batterie d'accumulateurs selon l'invention;

la figure 2 un schéma d'assemblage de batteries;

la figure 3 une coupe partielle montrant l'implantation d'une borne à l'intérieur du bac; et

la figure 4 un schéma de montage d'une batterie sur un appareil électroménager.

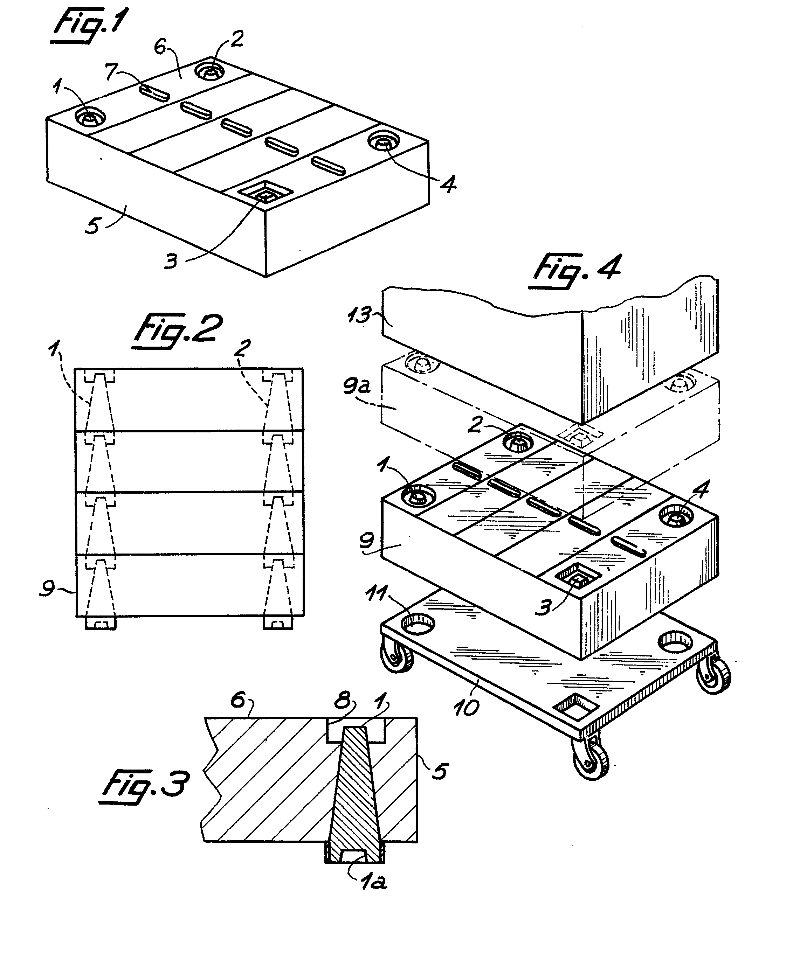

Sur la figure 1, on a représenté une batterie d'accumulateurs selon la présente invention dont on peut voir qu'elle présente la forme d'un parallélépipède dont la hauteur est très inférieure à la longueur et à la largeur, contrairement à celles utilisées habituellement, notamment en automobile. En fait, il est souhaitable que la section dans un plan horizontal de ce parallélépipède corresponde à la section transversale moyenne d'un meuble électroménager. Les batteries d'accumulateurs selon l'invention sont de préférence des batteries délivrant un courant continu sous une tension 24 V et constituées de 12 éléments 2 V. Cette tension de 24 V correspond à la tension de sécurité préconisée en France pour les endroits humides.

Les plaques et l'électrolyte sont contenus dans un bac 5, les plaques étant connectées deux à deux aux bornes 1 (borne +) et 2 (borne -). Les bornes 3 et 4 peuvent être neutres. Sur la face supérieure 6 se trouve un ensemble de barrettes 7, destinées à fermer les compartiments contenant l'électrolyte. Selon une caractéristique de l'invention, les bornes 1 et 2 ont une forme tronconique ou en tronc de pyramide dont l'extrémité inférieure, présentant la section la plus large, se trouve saillante, hors du bac 5 sur la face inférieure de la batterie, afin d'assurer un meilleur contact. Comme celà apparaît sur la figure 3, la borne 1 est mécaniquement solidarisée avec le bac 5, la liaison entre le bac et la borne 1 étant bien entendu étanche. La borne 1 est connectée électriquement à l'ensemble des électrodes positives reliées en série. Dans la face supérieure 6 du bac 5 sont formées des cavités 8 à l'intérieur desquelles émerge l'extrémité supérieure de la borne 1. De plus, les cavités 8 ont des dimensions internes correspondant aux plus grandes sections des bornes 1.

Cette disposition a pour objet de permettre la connexion en série de plusieurs batteries 9 par simple superposition. En effet, suivant la puissance demandée, plusieurs batteries et, comme représenté sur la figure 2, quatre batteries 9 par exemple, peuvent être gerbées de manière à réaliser une connexion en série ou en parallèle en fonction de la nature des bornes qui viennent en contact réciproque. Comme celà apparaît sur la figure 1, et afin d'éviter éventuellement de mauvaises interconnexions, au moins l'une des bornes, par exemple la borne 3, peut être de forme différente de celle des autres bornes. De préférence et comme celà apparaît sur la figure 3, l'extrémité inférieure d'une borne 1 peut présenter un dégagement la permettant l'introduction de l'extrémité supérieure de la borne correspondante de la batterie placée en dessous.

Bien entendu, ces batteries peuvent être chargées, outre par des sources d'énergie mentionnées précédemment à l'aide d'un chargeur transformateur 220V-24V délivrant du courant continu ou redressé. Il est ainsi possible, par un assemblage de dix batteries, d'obtenir une tension de 240 V, la source d'alimentation étant protégée par des diodes anti-retour.

La figure 4 représente le montage d'une batterie 9 à l'intérieur d'un meuble électroménager. Dans ce montage, la batterie 9 est posée sur un socle 10 présentant deux électrodes, (dont seule l'électrode 11 apparaît sur la figure 4), contre lesquelles viennent en contact les bornes 1 et 2. En tant que de besoin, une seconde batterie 9a représentée en traits mixtes peut être superposée à la batterie 9 et le corps 13 de l'appareil électroménager est solidarisé avec le socle 10.

Il va de soi que des modifications peuvent être apportées aux modes de réalisation qui viennent d'être décrits, notamment par substitution de moyens techniques équivalents, sans sortir pour celà du cadre de la présente invention.

C'est ainsi que ce qui a été dit pour les batteries d'accumulateurs au plomb ou alcalins s'applique aux piles rechargeables.

D'autre part, des plaques d'interconnexion peuvent être disposées entre les batteries superposées pour réaliser des connexions en série, ces plaques ayant les mêmes dimensions que les batteries pouvant s'enficher sur les bornes. Outre un rôle passif de connexion, ces plaques peuvent contenir des éléments actifs électroniques, en particulier pour la charge de la batterie.

Elles peuvent également être incluses dans le socle de l'appareil le cas échéant.

REVENDICATIONS DE BREVET
----------------

1.- Batterie d'accumulateurs, notamment pour appareils électroménagers, comprenant un bac à l'intérieur duquel un nombre pair de plaques est plongé dans un électrolyte introduit dans le bac par la face supérieure de ce dernier, les plaques étant connectées, de deux en deux, en deux groupes dont chacun est au moins relié à l'une de deux bornes de sortie faisant saillie hors du bac à la face inférieure de ce dernier, et constituant des supports pour la batterie, caractérisée en ce qu'au moins deux bornes de sortie (1 à 4)présentent leur plus grande section à leur extrémité inférieure, saillant hors du bac (5), et en ce que leur extrémité supérieure émerge chacune à l'intérieur d'une cavité (8) formée dans la face supérieure (6) de la batterie.

2.- Batterie d'accumulateurs selon la revendication 1, caractérisée en ce qu'au moins une borne de sortie (1) a la forme d'un tronc de cône dont la plus grande section se trouve à l'extrémité inférieure.

3.- Batterie d'accumulateurs selon la revendication 1, caractérisée en ce qu'au moins une borne de sortie (1) a la forme d'un tronc de pyramide dont la plus grande section se trouve à l'extrémité inférieure.

4.- Batterie d'accumulateurs selon l'une quelconque des revendications 1 à 3, caractérisée en ce que les cavités (8) ont des dimensions internes correspondant aux plus grandes sections desdites bornes (1).

5.- Batterie d'accumulateur selon l'une quelconque des revendications 1 à 4, caractérisée en ce que l'extrémité inférieure d'au moins une borne (1) présente un dégagement (1a) permettant l'introduction de l'extrémité supérieure de la borne (1) correspondante d'une batterie placée en dessous.

6.- Batterie d'accumulateurs, selon l'une quelconque des revendications 1 à 5, caractérisée

0020277

en ce qu'elle a la forme d'un parallélépipède, dont la hauteur est très inférieure à la longueur et à la largeur.

7.- Appareil électroménager, caractérisé en ce qu'il comporte un socle (10) pour recevoir au moins une batterie d'accumulateurs selon l'une quelconque des revendications 1 à 6 précédentes, le socle (10) contenant des moyens de connexion (11) et/ou de charge.

Fig.1

Fig.2

Fig.3

Fig.4

Office européen
des brevets

**RAPPORT DE RECHERCHE EUROPEENNE**

0020277
Numéro de la demande

EP 80 40 0778

## DOCUMENTS CONSIDERES COMME PERTINENTS

| Catégorie | Citation du document avec indication, en cas de besoin, des parties pertinentes | Revendica-tion concernée |
|---|---|---|
| | US - A - 3 094 438 (JOHN L.S. DALEY) <br><br> * Colonne 2, lignes 38-72; colonne 3 * <br><br> -- | 1 |
| A | FR - A - 597 057 (A. JOLIVOT) | |
| A | US - A - 3 933 522 (HANS STEIG) | |
| A | US - A - 2 928 892 (GEORG G. ENSIGN) | |
| A | GB - A - 108 849 (SVENSKA ACKUMU-LATOR AKTIEBOLAGET JUNGNER) | |
| A | DE - B - 1 464 812 (BUSCHEN WALTER) <br><br> ---- | |

**CLASSEMENT DE LA DEMANDE (Int. Cl. 3)**

H 01 M 2/30
H 01 M 2/02

**DOMAINES TECHNIQUES RECHERCHES (Int. Cl. 3)**

H 01 M   2/30
     2/20
     2/02
     10/04

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 11-09-1980 | DE VOS |

OEB Form 1503.1   06.78